# EUROPÄISCHE PATENTSCHRIFT

(11) **EP 4 215 452 B1**
(45) Veröffentlichungstag und Bekanntmachung des Hinweises auf die Patenterteilung: **17.07.2024**
(21) Anmeldenummer: 22216325.5
(22) Anmeldetag: 23.12.2022
(51) Int. Cl.: B65D 19/18

(54) **MEHRWEGTRANSPORTBEHÄLTER MIT WASSERABLAUF**
REUSABLE TRANSPORT CONTAINER WITH WATER DRAIN
RÉCIPIENT DE TRANSPORT RÉUTILISABLE AVEC DRAINAGE D'EAU

(30) Priorität: 24.01.2022 DE 102022101586
(43) Veröffentlichungstag der Anmeldung: 26.07.2023
(73) Patentinhaber: Schoeller Allibert GmbH, 19057 Schwerin (DE)
(72) Erfinder: GALUSZKA, Roman, 73601 Havírov (CZ); SCHLEISICK, Thomas, 57299 Burbach (DE)
(74) Vertreter: Winter, Brandl - Partnerschaft mbB

(56) Entgegenhaltungen:
- DE-A1- 2 364 417
- JP-A- 2017 171 314
- JP-U- S5 222 347
- KR-A- 20190 083 425
- US-A1- 2011 139 774

## Beschreibung

### Technisches Gebiet

Die vorliegende Offenbarung betrifft einen Mehrwegtransportbehälter mit Wasserablauföffnungen in einer Wandung des Mehrwegtransportbehälters.

Mehrwegtransportbehälter finden in weiten Bereichen der Industrie und Logistik Anwendung, um Halbzeug, Roh- und Fertigteile zu lagern und zu transportieren. Um die Mehrwegtransportbehälter platz- und damit kosteneffizient zu lagern, werden häufig Regale und Hochregale verwendet, in welchen die Mehrwegtransportbehälter direkt oder auf Paletten in mehreren Etagen übereinander eingelagert sind. Ein solches Regal hat eine definierte maximale Tragkraft, welche typischerweise in maximaler Traglast / Tragkraft pro Euro-Palette angegeben wird. Zusätzlich ist eine Lastverteilung in dem Regal vorgeschrieben. Wenn die maximale Tragkraft überschritten wird oder die vorgeschriebene Lastverteilung nicht eingehalten wird, kann es zu gefährlichen Situationen bis hin zu einem Einsturz des Regals kommen.

Lagerhallen, in welchen die Regale mit den Mehrwegtransportbehältern gelagert sind, sind häufig mit einem Feuerlöschsystem ausgestattet. Bei dem Feuerlöschsystem wird im Allgemeinen in Nassanlagen und Trockenanlagen unterschieden. Bei einer Nassanlage, welche in Form einer Sprinkleranlage ausgebildet ist, werden in Lageranwendungen im Brandfall für gewöhnlich bis zu 30 Liter Löschwasser pro Minute pro Quadratmeter ausgebracht. Dieses Löschwasser wird auch in die sich im Regal befindlichen Mehrwegtransportbehälter durch eine obenliegende Öffnung eingebracht und erhöht dadurch das Gewicht der betroffenen Mehrwegtransportbehälter. Hierdurch kann es zu einer Überschreitung der maximalen Traglast oder zu einer unzulässigen Lastverteilung kommen, wodurch es zu gefährlichen Situationen bis hin zu lebensbedrohlichen Situationen für Mitarbeiter, Rettungs- und Löschkräfte kommen kann.

Um dieses Problem zu lösen, werden Mehrwegtransportbehälter mit Öffnungen ausgebildet, durch welche das Löschwasser ablaufen kann. Durch solche Löcher kann jedoch bei einer Außenlagerung des Mehrwegtransportbehälters Regenwasser in den Mehrwegtransportbehälter eindringen, auch wenn der Mehrwegtransportbehälter mit einem Deckel verschlossen ist.

Ein Transportbehälter nach dem Oberbegriff des Anspruchs 1 ist aus JP 2017 171314 A j bekannt. Weiterer Stand der Technik ist in US 2011/0139774 A1 offenbart.

Aufgabe der vorliegenden Erfindung ist es daher, einen Mehrwegtransportbehälter bereitzustellen, der ein Entstehen der beschriebenen gefährlichen Situationen verhindert und gleichzeitig ein Eindringen von Regenwasser in den Mehrwegtransportbehälter erschwert oder verhindert.

Die Aufgabe wird gelöst durch einen Mehrwegtransportbehälter gemäß dem unabhängigen Anspruch 1. Vorteilhafte Weiterbildungen sind Teil der abhängigen Ansprüche.

Konkret wird die Aufgabe gelöst durch einen Mehrwegtransportbehälter mit einem Boden und einer sich im Wesentlichen rechtwinklig von dem Boden weg erstreckenden (Seiten-) Wandung. Die Wandung ist mit zumindest einem Durchbruch ausgebildet, der einen Innenraum des Mehrwegtransportbehälters mit einer Umgebung des Mehrwegtransportbehälters verbindet. Der Durchbruch ist auf einer Seite hin zu dem Innenraum mit einem Stauwandabschnitt ausgebildet, der sich in einer Richtung weg von dem Boden in den Durchbruch erstreckt. Weiterhin ist der Durchbruch auf einer Seite hin zu der Umgebung mit einem Abtropfwandabschnitt ausgebildet, der sich in einer Richtung hin zu dem Boden in den Durchbruch erstreckt. Der Stauwandabschnitt ragt von unten bzw. vom Boden her in den Durchbruch und verengt einen Querschnitt des Durchbruchs lokal von unten und der Abtropfwandabschnitt ragt von oben bzw. zum Boden hin in den Durchbruch und verengt den Querschnitt des Durchbruchs lokal von oben. Unter Querschnitt ist eine flächige Ausdehnung des Durchbruchs in einer Richtung parallel zu der Seitenwandung und normal zu dem Boden zu verstehen.

In anderen Worten ist die Wandung des Mehrwegtransportbehälters mit dem Durchbruch ausgebildet, in welchem sich der Stauwandabschnitt und der Abtropfwandabschnitt im Wesentlichen in Richtung parallel zu der Wandung und normal zu dem Boden gegenläufig erstrecken. Bevorzugt sind der Stauwandabschnitt und der Abtropfwandabschnitt plattenförmig ausgebildet, so dass eine Höhenerstreckung in einer normal zu dem Boden definierten Höhenrichtung größer ist als eine Breitenerstreckung in einer parallel zu dem Boden definierten Breitenrichtung.

Der Durchbruch erstreckt sich parallel zu dem Boden und weist im Wesentlichen eine zylindrische Geometrie auf. Der Stauwandabschnitt und der Abtropfwandabschnitt ragen in diese zylindrische Geometrie hinein, ohne sie vollständig zu überdecken.

Der Stauwandabschnitt und der Abtropfwandabschnitt sind in der Breitenrichtung versetzt zueinander angeordnet. Der Stauwandabschnitt ist näher an dem Innenraum ausgebildet als der Abtropfwandabschnitt. Weiterhin ist der Abtropfwandabschnitt hängend in dem Durchbruch ausgebildet und der Stauwandabschnitt ist stehend in dem Durchbruch ausgebildet.

Der Stauwandabschnitt und der Abtropfwandabschnitt bilden in dem Durchbruch eine Art Labyrinth, wobei der Abtropfwandabschnitt verhindert, dass (Regen-) Wasser aus einer Richtung von außen schräg oben direkt in den Innenraum des Mehrwegtransportbehälters gelangen kann. Der Stauwandabschnitt verhindert weiterhin, dass das von außen kommende Wasser über einen einem Boden zugewandten Abschnitt des Durchbruchs in den Innenraum läuft. Andererseits ermöglicht ein derartiger Durchbruch, dass (Lösch-) Wasser, welches sich in dem Innenraum befindet, durch den Durchbruch in ausreichender Menge abfließen kann, sobald ein (Lösch-)Wasserstand in dem Innenraum höher ist als eine Staukante des Stauwandabschnitts. Als Staukante wird die am weitesten von dem Boden beabstandete Kante des Stauwandabschnitts bezeichnet.

Kern der Erfindung ist demnach, den Mehrwegtransportbehälter mit dem im Wesentlichen stufenförmigen Durchbruch auszubilden, der eine ausreichend große Abflussmenge von (Lösch-)Wasser aus dem Innenraum ermöglicht und gleichzeitig das Eindringen von Regenwasser von außen verhindert.

In einem Aspekt kann der Stauwandabschnitt an einer an den Innenraum angrenzenden inneren Durchbruchsöffnung ausgebildet sein und der Abtropfwandabschnitt kann an einer an die Umgebung angrenzenden äußeren Durchbruchsöffnung ausgebildet sein.

Anders ausgedrückt kann der Abtropfwandabschnitt bündig an eine Außenseite der Wandung anschließen und sich von einer von dem Boden abgewandten Seite des Durchbruchs in den Durchbruch erstrecken. Der Stauwandabschnitt kann bündig an eine Innenseite der Wandung anschließen und sich von einer dem Boden zugewandten Seite des Durchbruchs in den Durchbruch erstrecken.

Auf diese Weise ist gewährleistet, dass das von außen kommende (Regen-) Wasser direkt von dem Abtropfwandabschnitt abtropft und an der Außenseite der Wandung des Mehrwegtransportbehälters abläuft. Weiterhin ist so eine Distanz zwischen Abtropfwandabschnitt und Stauwandabschnitt maximal, sodass das von außen kommende (Regen-) Wasser auch bei einem, bezogen auf die Wandung, großen Einfallswinkel des (Regen-) Wassers nicht in den Innenraum gelangt. Das Zusammenspiel von Stauwandabschnitt und Abtropfwandabschnitt sorgt dafür, dass Wasser von innen nach außen abwärts bzw. über eine Stufe nach unten fließen kann, aber von außen nach innen aufwärts bzw. über die Stufe nach oben fließen müsste, um ins Innere des Mehrwegtransportbehälters zu gelangen.

In einem weiteren Aspekt kann die Wandung doppelwandig mit einer dem Innenraum des Mehrwegtransportbehälters zugewandten inneren Deckschicht und einer der Umgebung des Mehrwegtransportbehälters zugewandten äußeren Deckschicht ausgebildet sein.

In anderen Worten kann die Außenseite der Wandung von einer äußeren Deckschicht gebildet sein und die Innenseite der Wandung von einer inneren Deckschicht gebildet sein. Die innere Deckschicht und die äußere Deckschicht können in einer Sandwichstruktur mit einer dazwischenliegenden Stützstruktur ausgebildet sein. Die innere Deckschicht und die äußere Deckschicht sind dabei im Wesentlichen parallel angeordnet.

Durch den doppelwandigen Aufbau kann eine ausreichende Stabilität bei gleichzeitiger Reduktion des Gewichts des Mehrwegtransportbehälters erzielt werden. Darüber hinaus lässt sich jede Deckschicht bzw. Wandung für sich gesehen einfacher fertigen und anschließend zusammengefügt werden.

In einem weiteren Aspekt kann sich der Abtropfwandabschnitt in einer ersten Ebene erstrecken, die einer Ebene der äußeren Deckschicht entspricht, und der Stauwandabschnitt kann sich sich in einer zweiten Ebene erstrecken, die einer Ebene der inneren Deckschicht entspricht.

Anders ausgedrückt kann der Abtropfwandabschnitt als Bestandteil der äußeren Deckschicht ausgebildet sein. Weiterhin kann der Stauwandabschnitt als Bestandteil der inneren Deckschicht ausgebildet sein. In nochmals andere Worten kann der Abtropfwandabschnitt stoffeinstückig mit der äußeren Dickschicht ausgebildet sein und eine Wandstärke des Abtropfwandabschnitts kann einer Wandstärke der äußeren Deckschicht entsprechen. Weiterhin kann der Stauwandabschnitt stoffeinstückig mit der inneren Deckschicht ausgebildet sein und eine Wandstärke des Stauwandabschnitts kann einer Wandstärkste der inneren Deckschicht entsprechen.

Durch eine derartige Ausbildung werden Fugen und Fügestellen vermieden, in denen sich Dreck und / oder Wasser sammeln kann und welche eine Schwachstelle der Wandung darstellen könnten.

In einem weiteren Aspekt kann die äußere Durchbruchöffnung an einer dem Boden zugewandten Kante mit einem Ablaufradius ausgebildet sein.

In anderen Worten kann der Durchbruch an der Außenseite der Wandung an der dem Abtropfwandabschnitt gegenüberliegenden Kante mit dem Ablaufradius ausgebildet sein.

Der Ablaufradius sorgt dafür, dass das (Regen-) Wasser, das von dem Abtropfwandabschnitt abtropft, nicht in den Durchbruch läuft, sondern über den Ablaufradius direkt auf die Außenseite der Wandung abgeleitet wird.

In einem weiteren Aspekt kann eine Mittelachse des Durchbruchs, welche sich von der inneren Durchbruchsöffnung zu der äußeren Durchbruchsöffnung erstreckt, im Wesentlichen parallel zu dem Boden ausgerichtet sein.

Anders ausgedrückt kann die Mittelachse des Durchbruchs normal zu der Wandung ausgebildet sein. In nochmals anderen Worten kann der Durchbruch im Wesentlichen horizontal ausgerichtet sein.

Auf diese Weise kann der Durchbruch kostengünstig hergestellt werden. Zusätzlich erlaubt eine derartige Ausbildung des Durchbruchs eine relativ freie Positionierung des Durchbruchs in der Wandung, da bei einer doppelwandigen Ausbildung der Wandung auf diese Weise zu wenigen Überschneidungen zwischen der Stützstruktur und dem Durchbruch kommt.

In einem weiteren Aspekt kann der Durchbruch von dem Boden beabstandet ausgebildet sein.

In anderen Worten kann der Durchbruch so in der Wandung positioniert sein, dass zwischen der Staukante und dem Boden ein (definierter) Abstand ausgebildet ist.

Eine solche Positionierung sorgt einerseits dafür, dass bei einem Brandfall eine definierte Menge (Lösch-) Wasser in dem Mehrwegtransportbehälter gehalten wird und so ein Brand in dem Mehrwegtransportbehälter wirkungsvoll bekämpft werden kann. Durch das beabstandete Vorsehen des Durchbruchs zu dem Boden wird zusätzlich eine Stabilität des Mehrwegtransportbehälters erhöht, da ein Durchbruch in einem Übergang von Wandung und Boden den mechanisch stark belasteten Übergang schwächt. Zusätzlich kann der Mehrwegtransportbehälter auf diese Weise optional mit einer klapp- oder faltbaren Wandung ausgebildet sein. Bei einem klappbaren Mehrwegtransportbehälter ist die Wandung mittels Scharnieren an dem Boden befestigt.

In einem weiteren Aspekt kann eine Erstreckung des Abtropfwandabschnitts normal zu dem Boden einer Erstreckung des Stauwandabschnitts normal zu dem Boden entsprechen.

Durch eine symmetrische Ausgestaltung können Werkzeug- und Produktionskosten reduziert werden.

In einem weiteren Aspekt kann die Wandung des Mehrwegtransportbehälters mit einer Vielzahl an Durchbrüchen ausgebildet sein, die in Reihen parallel zu dem Boden ausgebildet sind.

In anderen Worten können mehrere Durchbrüche nebeneinander in der Wandung ausgebildet sein. Staukanten der Stauabschnitte der mehreren Durchbrüche weisen einen gleichen Abstand zu dem Boden auf.

Auf diese Weise kann gewährleistet werden, dass bei einem Anstauen von (Lösch-) Wasser in dem Mehrwegtransportbehälter das (Lösch-) Wasser gleichmäßig durch die mehreren Durchbrüche abfließt. Auf diese Weise wird eine Übermäßige Belastung eines einzelnen Durchbruchs verhindert und gleichzeitig können die einzelnen Durchbrüche so klein gestaltet werden, dass auch kleine Produkte in dem Mehrwegtransportbehälter transportiert und / oder gelagert werden können und gleichzeitig eine ausreichende Durchflussmenge / Ablaufmenge durch die Durchbrüche gewährleistet ist.

In einem weiteren Aspekt kann sich eine Anzahl der Durchbrüche pro Reihe in einer Richtung weg von dem Boden verringern.

In anderen Worten nimmt eine Durchbruchsdichte in der Wandung ausgehend von dem Boden ab.

Mehrwegtransportbehälter sind in einem gefüllten Zustand meist nicht vollständig mit Material gefüllt. Demnach ist die Wahrscheinlichkeit, dass Durchbrüche in Bodennähe von Material überdeckt / partiell verschlossen sind, größer, als dass Durchbrüche die von dem Boden weiter beabstandet sind von dem Material überdeckt sind.

Auf diese Weise kann gewährleistet werden, dass auch in dem gefüllten Zustand in Bodennähe die notwendige Durchflussmenge erreicht wird um zu verhindern, dass sich der Mehrwegtransportbehälter mit (Lösch-)Wasser füllt.

In einem weiteren Aspekt ragen der Stauwandabschnitt und der Abtropfwandabschnitt in entgegengesetzter Orientierung in den Durchbruch hinein.

In anderen Worten ist die lokale Verengung des Querschnitts des Durchbruchs durch den Stauwandabschnitt von unten ausgebildet und die lokale Verengung des Querschnitts des Durchbruchs durch den Abtropfwandabschnitt von oben ausgebildet. Die Verengung durch den Stauwandabschnitt kann der Verengung durch den Abtropfwandabschnitt entsprechen. Es sind jedoch auch Ausführungsformen vorstellbar, in denen die Verengungen unterschiedlich ausgebildet sind.

In einem weiteren Aspekt kann eine Erstreckung des Durchbruchs normal zu dem Boden größer sein als eine Erstreckung parallel zu dem Boden

In einem weiteren Aspekt kann die Erstreckung des Abtropfwandabschnitts normal zu dem Boden kleiner sein als ein Viertel der Erstreckung des Durchbruchs normal zu dem Boden.

In einem weiteren Aspekt kann die Erstreckung des Stauwandabschnitts normal zu dem Boden kleiner sein als ein Viertel der Erstreckung des Durchbruchs normal zu dem Boden.

In einem weiteren Aspekt können der Stauwandabschnitt und der Abtropfwandabschnitt den Querschnitt des Durchbruchs lokal um maximal 15 %, vorzugsweise um maximal 10 % reduzieren.

### Kurzbeschreibung der Figuren

Fig. 1 ist eine Darstellung eines erfindungsgemäßen Mehrwegtransportbehälters in einer teilweise geschnittenen Darstellung;
Fig. 2 ist eine erste Schnittansicht einer Wandung des erfindungsgemäßen Mehrwegtransportbehälters in einem Bereich eines Durchbruchs;
Fig. 3 ist eine perspektivische zweite Schnittansicht einer Wandung des erfindungsgemäßen Mehrwegtransportbehälters in dem Bereich des Durchbruchs.

### Beschreibung der Ausführungsbeispiele

Nachstehend werden Ausführungsbeispiele der vorliegenden Offenbarung auf der Basis der zugehörigen Figuren beschrieben.

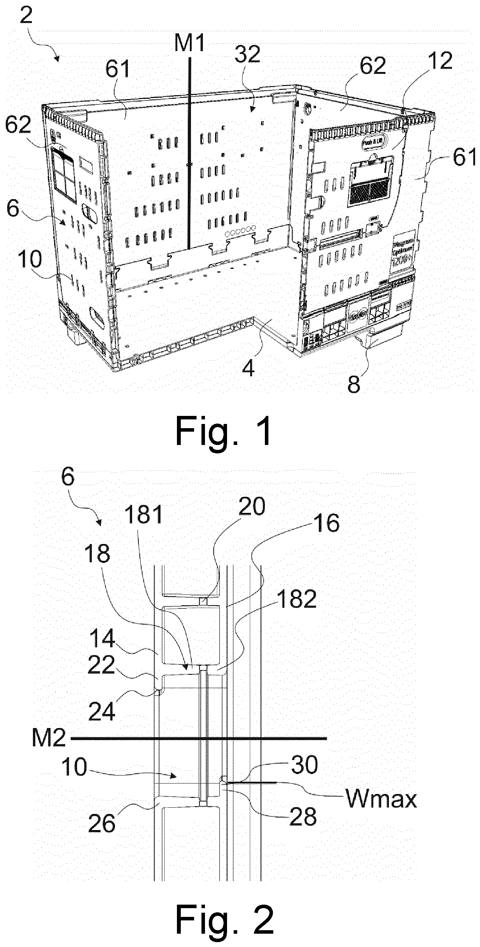

Fig. 1 zeigt einen erfindungsgemäßen Mehrwegtransportbehälter 2, welcher insbesondere aus Kunststoff gebildet ist, mit einem Eckausschnitt zur besseren Veranschaulichung. Der Mehrwegtransportbehälter 2 beinhaltet einen Boden 4 und eine sich im Wesentlichen rechtwinklig von dem Boden 4 weg erstreckende Wandung 6. Die Wandung 6 wird gebildet durch zwei erste lange Seitenwände 61 und zwei zweite kurze Seitenwände 62. Die ersten Seitenwände 61 sind an langen Seiten des Bodens 4 ausgebildet und die kurzen Seitenwände 62 sind an kurzen Seiten des Bodens 4 ausgebildet. An dem Boden 4 sind an einer von der Wandung 6 abgewandten Seite Standkufen 8 ausgebildet. In der Wandung 6 sind Wasserablauföffnungen 10 in Form von Durchbrüchen ausgebildet, die einen Innenraum des Mehrwegtransportbehälters 2 mit einer Umgebung des Mehrwegtransportbehälters 2 verbinden. Die Wasserablauföffnungen 10 sind in Reihen parallel zu dem Boden 4 ausgebildet.

Eine Anzahl an Wasserablauföffnungen 10 pro Reihe ist in Reihen, die näher zu dem Boden 4 angeordnet sind, größer, als die Anzahl an Wasserablauföffnungen 10 pro Reihe in Reihen, die weiter von dem Boden 4 beabstandet sind. Die Wasserablauföffnungen 10 sind in einer Richtung parallel zu dem Boden 4 von Reihe zu Reihe versetzt angeordnet. Ein Anordnungsmuster der Wasserablauföffnungen 10 ist dabei symmetrisch zu einer Mittellinie M1 der jeweiligen Seitenwand 61, 62, wobei sich die Mittellinie senkrecht / normal zu dem Boden 4 erstreckt und zu von der jeweiligen Seitenwand 61, 62 benachbarten Seitenwänden 61, 62 einen identischen Abstand aufweist. Die Wasserablauföffnungen 10 sind dabei pyramidenförmig angeordnet. Die lange Seitenwand 61 ist mit einer Klappe 12 ausgebildet, die ein Öffnen eines Teilabschnitts der Seitenwand 61 ermöglicht. Die Wasserablauföffnungen 10 sind ebenfalls in der Klappe 12 vorgesehen.

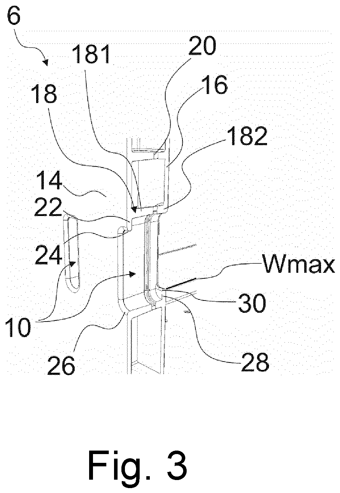

Nachfolgend wird ein Aufbau der Wandung 6 mit der Wasserablauföffnung anhand von Fig. 2 und Fig. 3 näher erläutert.

Die Wandung 6 beinhaltet einen äußere Deckschicht 14, welche der Umgebung des Mehrwegtransportbehälters 2 zugewandt ist, eine innere Deckschicht 16, welche dem Innenraum des Mehrwegtransportbehälters 2 zugewandt ist, und eine Stützstruktur 18, welche die innere Deckschicht 16 und die äußere Deckschicht 14 miteinander verbindet. Die Stützstruktur 18 besteht aus einer äußeren Stützstruktur 181, welche nahtlos mit der äußeren Deckschicht 14 ausgebildet ist, und einer inneren Stützstruktur 182, welche nahtlos mit der inneren Deckschicht 16 ausgebildet ist. Die äußere Stützstruktur 181 und die innere Stützstruktur 182 sind durch eine Schweiß- oder Klebenaht 20 miteinander vorzugsweise stoffschlüssig verbunden. Die Stützstruktur 18 erstreckt sich im Wesentlichen normal zu der äußeren Deckschicht 14 und der inneren Deckschicht 16. Durch die Wandung 6 verläuft die Wasserablauföffnung 10, deren Mittelfaser M2 normal zu der äußeren Deckschicht 14 und der inneren Deckschicht 16 und damit parallel zu der Stützstruktur 18 orientiert ist.

An einem der Umgebung zugewandten Ende der Wasserablauföffnung 10 erstreckt sich in der Wasserablauföffnung 10 in einer Richtung zu dem Boden 4 ein Abtropfwandabschnitt 22. Anders ausgedrückt ist der Abtropfwandabschnitt 22 an einem oberen Ende der Wasserablauföffnung 10 ausgebildet. Der Abtropfwandabschnitt 22 ist dabei im Wesentlichen plattenförmig ausgebildet und eine Dicke in einer Richtung parallel zu der Mittelfaser M2 entspricht einer Dicke der äußeren Deckschicht 14. Der Abtropfwandabschnitt 22 ist in der hier gezeigten Ausführungsform als ein Fortsatz der äußeren Deckschicht 14 ausgebildet. In anderen Worten ist der Abtropfwandabschnitt 22 Teil der äußeren Deckschicht 14. Eine dem Boden 4 zugewandte Kante des Abtropfwandabschnitts 22 ist als Abtropfkante 24 ausgebildet. Die Abtropfkante 24 ist im Wesentlichen parallel zu dem Boden 4 orientiert. An einem unteren Ende der Wasserablauföffnung ist an / in der äußeren Deckschicht 14 ein Ablaufradius 26 ausgebildet.

An einem dem Innenraum zugewandten Ende der Wasserablauföffnung 10 erstreckt sich in der Wasserablauföffnung 10 in einer Richtung weg von dem Boden 4 ein Stauwandabschnitt 28. Anders ausgedrückt ist der Stauwandabschnitt 28 an einem unteren Ende der Wasserablauföffnung 10 ausgebildet. Der Stauwandabschnitt 28 ist dabei im Wesentlichen plattenförmig ausgebildet und eine Dicke in der Richtung parallel zu der Mittelfaser M2 entspricht der Dicke der inneren Deckschicht 16. Der Stauwandabschnitt 28 ist in der hier gezeigten Ausführungsform als Fortsatz der inneren Deckschicht 16 ausgebildet. In anderen Worten ist der Stauwandabschnitt 28 Teil der inneren Deckschicht 16. Eine von dem Boden 4 abgewandte Kante des Stauwandabschnitts 28 ist als Staukante 30 ausgebildet. Die Staukante 30 ist im Wesentlichen parallel zu dem Boden 4 orientiert.

Eine Erstreckungslänge des Abtropfwandabschnitts 22 normal zu der Mittelfaser M2 entspricht im Wesentlichen einer Erstreckungslänge des Stauwandabschnitts 28 normal zu der Mittelfaser M2.

Nachfolgend wird eine beispielhafte Funktionsweise der Wasserablauföffnung 10 unter Zuhilfenahme der Fig. 1 bis Fig. 3 beschrieben.

Löschwasser (nicht dargestellt), welches von einer Sprinkleranlage versprüht wird, gelangt über die Mehrwegtransportbehälteröffnung 32 in das Innere des Mehrwegtransportbehälters. Dort sammelt es sich, bis ein maximaler Wasserstand Wmax erreicht ist. Der maximale Wasserstand Wmax ist dabei so weit von dem Boden 4 beabstandet wie die Staukante 30. Wenn der maximale Wasserstand Wmax überschritten ist, läuft das Löschwasser über die Staukante 30 des Stauwandabschnitts 28 in die Wasserablauföffnung 10 und durch die Wasserablauföffnung 10 zu dem Ablaufradius 26. Anschließend läuft das Löschwasser an der Außenseite des äußeren Wandabschnitts 14 ab.

Andererseits verhindert der Abtropfwandabschnitt 22, dass Regenwasser, insbesondere bei einem großen Einfallswinkel bezogen auf die Wandung 6, in den Innenraum eindringen kann. Ferner verhindert der Stauwandabschnitt 28, dass das Regenwasser, selbst wenn es in die Wasserablauföffnung 10 gelangt, in den Innenraum des Mehrwegtransportbehälters 2 läuft. In dem Fall, dass das Regenwasser zwischen den Abtropfwandabschnitt 22 und den Stauwandabschnitt 28 gelangt, wird es von dem Stauwandabschnitt 28 zurückgehalten und läuft zu dem Ablaufradius 26. Anschließend läuft das Regenwasser an der Außenseite des äußeren Wandabschnitts 14 ab.

### Bezugszeichenliste

- 2: Mehrwegtransportbehälter
- 4: Boden
- 6: Wandung
- 61: erste Seitenwand
- 62: zweite Seitenwand
- 8: Standkufen
- 10: Wasserablauföffnung
- 12: Klappe
- 14: äußere Deckschicht
- 16: innere Deckschicht
- 18: Stützstruktur
- 181: äußere Stützstruktur
- 182: innere Stützstruktur
- 20: Schweiß- oder Klebenaht
- 22: Abtropfwandabschnitt
- 24: Abtropfkante
- 26: Ablaufradius
- 28: Stauwandabschnitt
- 30: Staukante
- 32: Mehrwegtransportbehälteröffnung
- M1: Mittellinie
- M2: Mittelfaser
- Wmax: maximaler Wasserstand

## Patentansprüche

1. Mehrwegtransportbehälter (2) mit
einem Boden (4) und
einer sich im Wesentlichen rechtwinklig von dem Boden (4) weg erstreckenden Wandung (6), wobei die Wandung (6) mit zumindest einem Durchbruch (10) ausgebildet ist, der einen Innenraum des Mehrwegtransportbehälters (2) mit einer Umgebung des Mehrwegtransportbehälters (2) verbindet, wobei
der Durchbruch (10) auf einer Seite hin zu dem Innenraum mit einem Stauwandabschnitt (28) ausgebildet ist, der sich in einer Richtung weg von dem Boden (4) in den Durchbruch (10) erstreckt und eine Querschnittsfläche des Durchbruchs (10) lokal verengt, **dadurch gekennzeichnet, dass**
der Durchbruch (10) auf einer Seite hin zu der Umgebung mit einem Abtropfwandabschnitt (22) ausgebildet ist, der sich in einer Richtung hin zu dem Boden (4) in den Durchbruch (10) erstreckt und die Querschnittsfläche des Durchbruchs (10) lokal verengt.

2. Mehrwegtransportbehälter (2) nach Anspruch 1, **dadurch gekennzeichnet, dass** der Stauwandabschnitt (28) an einer an den Innenraum angrenzenden inneren Durchbruchsöffnung ausgebildet ist und der Abtropfwandabschnitt (22) an einer an die Umgebung angrenzenden äußeren Durchbruchsöffnung ausgebildet ist.

3. Mehrwegtransportbehälter (2) nach Anspruch 1 oder 2, **dadurch gekennzeichnet, dass** die Wandung (6) doppelwandig mit einer dem Innenraum des Mehrwegtransportbehälters (2) zugewandten inneren Deckschicht (16) und einer der Umgebung des Mehrwegtransportbehälters (2) zugewandten äußeren Deckschicht (14) ausgebildet ist.

4. Mehrwegtransportbehälter (2) nach Anspruch 3, **dadurch gekennzeichnet, dass** der Abtropfwandabschnitt (22) sich in einer ersten Ebene erstreckt, die einer Ebene der äußeren Deckschicht (14) entspricht und der Stauwandabschnitt (28) sich in einer zweiten Ebene erstreckt, die einer Ebene der inneren Deckschicht (16) entspricht.

5. Mehrwegtransportbehälter (2) nach einem der Ansprüche 1 bis 3, **dadurch gekennzeichnet, dass** die äußere Durchbruchöffnung an einer dem Boden (4) zugewandten Kante mit einem Ablaufradius (26) ausgebildet ist.

6. Mehrwegtransportbehälter (2) nach einem der Ansprüche 1 bis 5, **dadurch gekennzeichnet, dass** eine Mittelachse (M2) des zumindest einen Durchbruchs (10), welche sich von der inneren Durchbruchsöffnung zu der äußeren Durchbruchsöffnung erstreckt, im Wesentlichen parallel zu dem Boden (4) ausgerichtet ist.

7. Mehrwegtransportbehälter (2) nach einem der Ansprüche 1 bis 6, **dadurch gekennzeichnet, dass** der zumindest eine Durchbruch (10) von dem Boden (4) beabstandet ausgebildet ist.

8. Mehrwegtransportbehälter (2) nach einem der Ansprüche 1 bis 7, **dadurch gekennzeichnet, dass** eine Erstreckung des Abtropfwandabschnitts (22) normal zu dem Boden (4) einer Erstreckung des Stauwandabschnitts (28) normal zu dem Boden (4) entspricht.

9. Mehrwegtransportbehälter (2) nach einem der Ansprüche 1 bis 8, **dadurch gekennzeichnet, dass** die Wandung (6) des Mehrwegtransportbehälters (2) mit einer Vielzahl an Durchbrüchen (10) ausgebildet ist, die in Reihen parallel zu dem Boden (4) ausgebildet sind.

10. Mehrwegtransportbehälter (2) nach Anspruch 9, **dadurch gekennzeichnet, dass** sich eine Anzahl der Durchbrüche (10) pro Reihe in einer Richtung weg von dem Boden (4) verringert.

11. Mehrwegtransportbehälter (2) nach einem der Ansprüche 1 bis 10, **dadurch gekennzeichnet, dass** der Stauwandabschnitt (28) und der Abtropfwandabschnitt (22) in entgegengesetzter Orientierung in den Durchbruch hineinragen.

## Claims

1. Reusable transport container (2) comprising:
a base (4) and
a wall (6) extending substantially at right angles away from the base (4), the wall (6) being formed with at least one aperture (10) which connects an interior of the reusable transport container (2) with the surroundings of the reusable transport container (2), wherein
the aperture (10) is formed with a retaining wall section (28) on one side towards the interior, which extends in a direction away from the base (4) into the aperture (10) and locally narrows a cross-sectional area of the aperture (10), **characterized in that**
the aperture (10) is formed on one side towards the surroundings with a drip-off wall section (22) which extends in one direction towards the base (4) into the aperture (10) and locally narrows the cross-sectional area of the aperture (10).

2. The reusable transport container (2) according to claim 1, **characterized in that** the retaining wall section (28) is formed at an inner aperture opening adjacent to the interior and the drip-off wall section (22) is formed at an outer aperture opening adjacent to the surroundings.

3. The reusable transport container (2) according to claim 1 or 2, **characterized in that** the wall (6) is formed as a double-wall with an inner cover layer (16) facing the interior of the reusable transport container (2) and an outer cover layer (14) facing the surroundings of the reusable transport container (2).

4. The reusable transport container (2) according to claim 3, **characterized in that** the drip-off wall section (22) extends in a first plane which corresponds to a plane of the outer cover layer (14) and the retaining wall section (28) extends in a second plane which corresponds to a plane of the inner cover layer (16).

5. The reusable transport container (2) according to any of claims 1 to 3, **characterized in that** the outer aperture opening is formed on an edge facing the base (4) with a drain radius (26).

6. The reusable transport container (2) according to any of claims 1 to 5, **characterized in that** a central axis (M2) of the at least one aperture (10) which extends from the inner aperture opening to the outer aperture opening is aligned substantially parallel to the base (4).

7. The reusable transport container (2) according to any of claims 1 to 6, **characterized in that** the at least one aperture (10) is formed at a distance from the base (4).

8. The reusable transport container (2) according to any of claims 1 to 7, **characterized in that** an extension of the drip-off wall section (22) normal to the base (4) corresponds to an extension of the retaining wall section (28) normal to the base (4).

9. The reusable transport container (2) according to any of claims 1 to 8, **characterized in that** the wall (6) of the reusable transport container (2) is formed with a plurality of apertures (10) which are formed in rows parallel to the base (4).

10. The reusable transport container (2) according to claim 9, **characterized in that** the number of apertures (10) per row decreases in a direction away from the base (4).

11. The reusable transport container (2) according to any of claims 1 to 10, **characterized in that** the retaining wall section (28) and the drip-off wall section (22) project into the aperture in opposite orientation.

## Revendications

1. Récipient de transport réutilisable (2) comprenant
un fond (4) et
une paroi (6) sensiblement à angle droit s'étendant en s'éloignant depuis le fond (4), dans lequel la paroi (6) est réalisée avec au moins une percée (10) qui relie un espace intérieur du récipient de transport réutilisable (2) à un environnement du récipient de transport réutilisable (2), dans lequel
la percée (10) est réalisée sur un côté vers l'espace intérieur avec une section de paroi de retenue (28) qui s'étend dans la percée (10) dans une direction s'éloignant du fond (4) et rétrécit localement une surface de section transversale de la percée (10), **caractérisé en ce que**
la percée (10) est réalisée sur un côté vers l'environnement avec une section de paroi d'égouttage (22) qui s'étend dans la percée (10) dans une direction vers le fond (4) et rétrécit localement la surface de section transversale de la percée (10).

2. Récipient de transport réutilisable (2) selon la revendication 1, **caractérisé en ce que** la section de paroi de retenue (28) est réalisée au niveau de l'ouverture de percée intérieure adjacente à l'espace intérieur et la section de paroi d'égouttage (22) est réalisée au niveau d'une ouverture de percée extérieure adjacente à l'environnement.

3. Récipient de transport réutilisable (2) selon la revendication 1 ou 2, **caractérisé en ce que** la paroi (6) est réalisée à double paroi avec une couche de recouvrement intérieure (16) tournée vers l'espace intérieur du récipient de transport réutilisable (2) et une couche de recouvrement extérieure (14) tournée vers l'environnement du récipient de transport réutilisable (2).

4. Récipient de transport réutilisable (2) selon la revendication 3, **caractérisé en ce que** la section de paroi d'égouttage (22) s'étend dans un premier plan qui correspond à un plan de la couche de recouvrement extérieure (14) et la section de paroi de retenue (28) s'étend dans un second plan qui correspond à un plan de la couche de recouvrement intérieure (16).

5. Récipient de transport réutilisable (2) selon l'une quelconque des revendications 1 à 3, **caractérisé en ce que** l'ouverture de percée extérieure est réalisée au niveau d'un bord tourné vers le fond (4) avec un rayon de drainage (26).

6. Récipient de transport réutilisable (2) selon l'une quelconque des revendications 1 à 5, **caractérisé en ce qu'**un axe central (M2) de l'au moins une percée (10), qui s'étend de l'ouverture de percée intérieure vers l'ouverture de percée extérieure, est orienté sensiblement parallèlement au fond (4).

7. Récipient de transport réutilisable (2) selon l'une quelconque des revendications 1 à 6, **caractérisé en ce que** l'au moins une percée (10) est réalisée à distance du fond (4).

8. Récipient de transport réutilisable (2) selon l'une quelconque des revendications 1 à 7, **caractérisé en ce qu'**une extension de la section de paroi d'égouttage (22) perpendiculaire au fond (4) correspond à une extension de la section de paroi de retenue (28) perpendiculaire au fond (4).

9. Récipient de transport réutilisable (2) selon l'une quelconque des revendications 1 à 8, **caractérisé en ce que** la paroi (6) du récipient de transport réutilisable (2) est réalisée d'une pluralité de percées (10) qui sont réalisées en rangées parallèles au fond (4).

10. Récipient de transport réutilisable (2) selon la revendication 9, **caractérisé en ce qu'**un certain nombre de percées (10) par rangée diminue dans une direction s'éloignant du fond (4).

11. Récipient de transport réutilisable (2) selon l'une quelconque des revendications 1 à 10, **caractérisé en ce que** la section de paroi de retenue (28) et la section de paroi d'égouttage (22) font saillie dans la percée selon une orientation opposée.
